## Europäisches Patentamt
## European Patent Office
## Office européen des brevets

(19)

(11) Veröffentlichungsnummer: **0 149 167**
**B1**

(12) # EUROPÄISCHE PATENTSCHRIFT

(45) Veröffentlichungstag der Patentschrift:
10.08.88

(51) Int. Cl.⁴: **G 06 K 7/10**

(21) Anmeldenummer: **84115599.7**

(22) Anmeldetag: **17.12.84**

(54) Optoelektrische Abtasteinrichtung für alphanumerische Zeichen und/oder strichcodierte Daten.

(30) Priorität: **30.12.83 DE 3347613**

(43) Veröffentlichungstag der Anmeldung:
**24.07.85 Patentblatt 85/30**

(45) Bekanntmachung des Hinweises auf die Patenterteilung:
**10.08.88 Patentblatt 88/32**

(84) Benannte Vertragsstaaten:
**AT BE CH DE FR GB IT LI NL SE**

(56) Entgegenhaltungen:
**FR-A-2 479 511**
**FR-A-2 482 749**
**US-A-3 792 268**
**US-A-4 308 573**

(73) Patentinhaber: **COMPUTER GESELLSCHAFT KONSTANZ MBH, Max- Stromeyer- Strasse 116, D-7750 Konstanz (DE)**

(72) Erfinder: **Minck, Konrad, Dipl.- Ing., Lessingstrasse 1, D-7750 Konstanz (DE)**

(74) Vertreter: **Mehl, Ernst, Dipl.- Ing., Postfach 22 13 17, D-8000 München 22 (DE)**

EP 0 149 167 B1

**Beschreibung**

Die Erfindung betrifft eine optoelektrische Abtasteinrichtung für alphanumerische Zeichen und/oder strichcodierte Daten nach dem Oberbegriff des Patentanspruchs 1.

Eine Abtasteinrichtung dieser Art ist beispielsweise aus dem Dokument FR-A-2 479 511 bekannt.

Bei der optischen Zeichenerkennung wird die von einem beleuchteten Datenträger remittierte Helligkeit entsprechend der Helligkeitsverteilung von Zeichen und Zeichenhintergrund mittels einer Optik auf einer Fotodiodematrix abgebildet, die diese Helligkeit in elektrische Signale umwandelt. Aus diesen elektrischen Signalen wird schließlich ein binäres Rasterbild hergestellt, das nur noch aus schwarzen und weißen Bildpunkten besteht. Diese Art der Abtastung liefert stets dann gute Leseergebnisse, wenn der Kontrast zwischen Zeichen und Zeichenhintergrund möglichst groß ist, wie dies insbesondere bei schwarzen Zeichen auf mattem, hellem, vorzugsweise weißem Papier der Fall ist.

Schwierigkeiten ergeben sich indessen, wenn der Zeichenhintergrund Glanzstellen aufweist, da diese von der Abtastoptik als dunkle Flecken "gesehen" und damit fälschlicherweise als Zeichenbestandteil registriert werden. Derartige Abtastprobleme treten beispielsweise bei der Abtastung von in kupferkaschierten Leiterplatten eingravierten oder eingefrästen Zeichen auf, wobei hier neben üblichen Glanzstellen in der Kupferoberfläche zusätzlich noch Kratz- und Schleifspuren hinzukommen können, die ebenfalls als dunkle Stellen gewertet werden. Insbesondere durch Schleifspuren kommt es nämlich zu empfindlichen Störungen, weil durch sie das einfallende Licht so weit abgelenkt wird, daß es zur Gänze am Objektiv der Abtastoptik vorbeireflektiert wird. Ebenso führt jede Zunahme des allgemeinen Glanzes zu einer spürbaren Abnahme der vom Abtaster wahrgenommenen Zeichenhintergrundshelligkeit im mittleren Bereich der Abtastzone und zu einer entsprechenden Anhebung in den oberen und unteren Randbereichen. Dies liegt, bildlich gesehen, daran, daß sich das Objektiv hinter der Spiegelfläche selbst dunkel und seine Umgebung am Rand hell "sieht".

Der vorliegenden Erfindung liegt nun die Aufgabe zugrunde, eine optische Abtasteinrichtung der eingangs genannten Art in der Weise zu verbessern, daß auch bei Aufzeichnungsträgern mit glänzendem Zeichenhintergrund eine hohe Lesesicherheit gewährleistet ist.

Diese Aufgabe wird erfindungsgemäß durch die kennzeichnenden Merkmale des Patentanspruchs 1 gelöst.

Vorteilhafte Weiterbildungen des Erfindungsgedankens sind in den Unteransprüchen angegeben.

Im folgenden wird ein Ausführungsbeispiel der Erfindung anhand der Zeichnung näher erläutert. Dabei zeigen

Fig. 1 das Prinzip eine optoelektrischen Abtasteinrichtung gemäß der Erfindung

Fig. 2 eine Ausführungsform für eine erfindungsgemäß ausgebildeten Lesekopf.

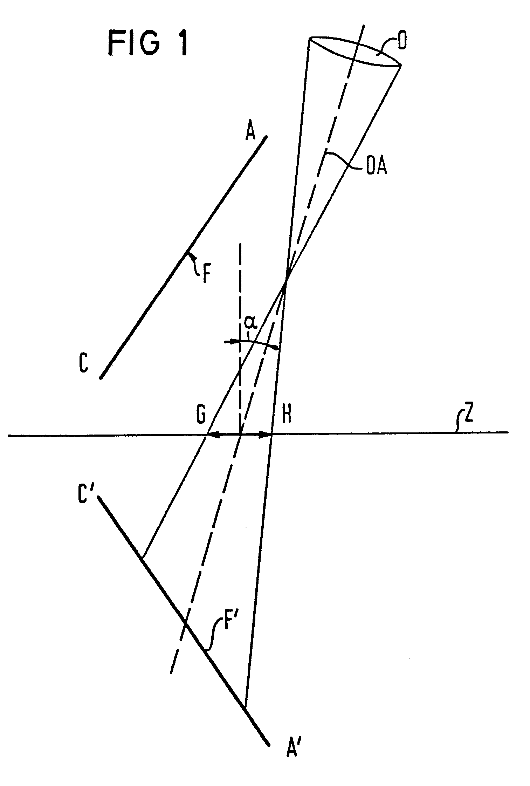

Die Fig. 1 zeigt einen Datenträger Z mit wenigstens teilweise glänzender Oberfläche, beispielsweise eine kupferkaschierte Leiterplatte, in die optisch lesbare Zeichen, insbesondere alphanumerische und/oder strichcodierte Zeichen eingefräst sind. Die optoelektrische Abtasteinrichtung ist in der Zeichnung lediglich durch ein Objektiv O symbolisiert, dessen optische Achse OA schräg zur Oberfläche des Zeichenträgers Z steht, wie aus FR-A-2 479 511 bekannt, wobei der im Bereich zwischen 0° und ca. 25° liegende Reflexionswinkel α vorzugsweise bei 18° gewählt ist. Weiterhin ist eine diffus leuchtende bzw. diffus reflektierende Fläche F vorgesehen, die der Abtasteinrichtung derart räumlich zugeordnet ist, daß ihre zugehörige, aufgrund der Spiegelung an der glänzenden Oberfläche im virtuellen Objektraum erscheinende virtuelle Fläche F' den in der Objektfläche liegenden Abtastbereich GH des Objektivs O ausleuchtet. Mit Hilfe dieser hell eingespiegelten Fläche F wird ein eventuell glänzender Zeichenträger Z im Abtastbereich GH des Objektivs O so aufgehellt, daß zwischen dem dunklen Zeichen und dem hellen Zeichenhintergrund wieder ein ausreichend hoher Kontrast hergestellt wird.

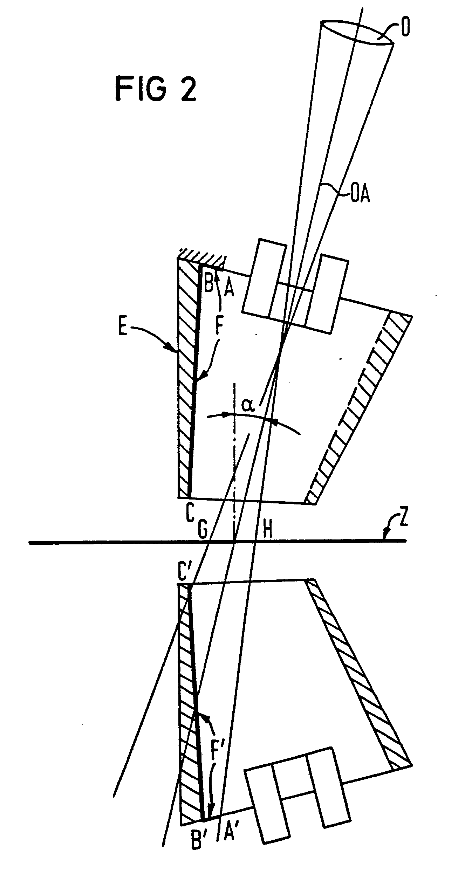

Die Fig. 2 zeigt einen Ausschnitt aus einem Gehäuse einer optoelektrischen Abtasteinrichtung in Form eines konisch verjüngten Endstücks E, dessen Abtastspitze in Anpassung an die schrägstehende optische Achse OA so abgeschrägt ist, daß sich im gesamten Bereich der Abtastspitze ein konstanter Abstand zum Zeichenträger Z ergibt. Im dargestellten Ausführungsbeispiel ist die diffus leuchtende, bzw. diffus reflektierende Fläche F in das Gehäuse der Abtasteinrichtung integriert. Diese Fläche F wird im wesentlichen durch den Flächenabschnitt BC an der Innenwandung des Abtast-Endstücks E und zu einem Teil durch den Flächenabschnitt AB im Bereich einer Trennebene zwischen Endstück und dem eigentlichen Lesekopf gebildet. Beide Flächenabschnitte AB und BC sind in bezug auf die offene Abtastspitze und den Zeichenträger Z so angeordnet, daß aufgrund der Spiegelung an der glänzenden Objektfläche des Zeichenträgers Z im virtuellen Objektraum eine virtuelle Fläche A', B', C' erscheint, die voll im Abtastbereich des Objektivs O liegt.

## Patentansprüche

1. Optoelektrische Abtasteinrichtung für alphanumerische Zeichen und/oder strichcodierte Daten mit einer Beleuchtungseinrichtung zur Ausleuchtung eines Abtastfeldes auf einer die Zeichen tragenden Objektfläche und einer aus einer Mehrzahl von Fotoelementen gebildeten Sensorfläche zum Umwandeln des von der Objektfläche über ein Objektiv (O) empfangenen reflektierten Lichts in analoge Bildsignale, bei der die Abtasteinrichtung in bezug auf eine wenigstens teilweise glänzende Objektfläche des Zeichenträgers (Z) so angeordnet ist, daß die optische Achse (OA) des Objektivs (O) in einem Reflexionswinkel 0° < α < 25° zum Einfallslot steht, gekennzeichnet, durch wenigstens eine diffus leuchtende oder diffus reflektierende Fläche (F) als zusätzliche Lichtquelle, die der Abtasteinrichtung derart räumlich zugeordnet ist, daß die zugehörige, aufgrund der Spiegelung an der glänzenden Objektfläche im virtuellen Objektraum erscheinende virtuelle Fläche (F') den in der Objektfläche liegenden Abtastbereich (GH) des Objektivs (O) ausleuchtet.

2. Optoelektrische Abtasteinrichtung nach Anspruch 1, dadurch gekennzeichnet, daß der Reflexionswinkel α = 18° gewählt ist.

3. Optoelektrische Abtasteinrichtung nach Anspruch 1 oder 2, dadurch gekennzeichnet, daß die diffus leuchtende oder diffus reflektierende Fläche (F) an der Innenseite eines die Abtasteinrichtung aufnehmenden Gehäuses angeordnet ist.

4. Optoelektrische Abtasteinrichtung nach Anspruch 3, dadurch gekennzeichnet, daß das Gehäuse in Richtung auf die Lichtein- bzw. Austrittsöffnung konusartig verjüngt ist.

## Claims

1. An opto-electrical scanning device for alphanumeric symbols and/or bar-coded data having an illumination device to illuminate a scanning field on an object surface carrying the symbols; and a sensor surface, formed from a plurality of photoelectric elements, to convert the reflected light received from the object surface via an objective (O) into analogue image signals, in which the scanning device is disposed in relation to an at least partially glossy object surface of the symbol-carrying medium (Z) so that the optical axis (OA) of the objective (O) is at an angle of reflection 0° < α < 25° to the normal, characterised by at least one diffusely-luminous or diffusely-reflecting surface (F) as an additional light source, which is spatially-associated with the scanning device in such a manner that the associated virtual surface (F'), appearing in the virtual object space on account of the reflection at the glossy object surface, illuminates the scanning region (GH), situated in the object surface, of the objective (O).

2. An opto-electrical scanning device as claimed in Claim 1, characterised in that the angle of reflection is selected at α = 18°.

3. An opto-electrical scanning device as claimed in Claim 1 or 2, characterised in that the diffusely-luminous or diffusely-reflecting surface (F) is disposed at the inner surface of a housing receiving the scanning device.

4. An opto-electrical scanning device as claimed in Claim 3, characterised in that the housing is tapered in the manner of a cone in a direction towards the light entrance or exit aperture.

## Revendications

1. Dispositif optoélectrique d'exploration de caractères alphanumériques et/ou de données au moyen d'un code à barres, comportant un dispositif d'éclairement servant à éclairer une zone d'exploration sur une surface objet, portant les caractères, et sur une surface de détection, formée par une multiplicité de cellules photovoltaïques, pour la conversion de la lumière réfléchie, reçue par la surface objet par l'intermédiaire d'un objectif (O), en des signaux analogiques d'image, et dans lequel le dispositif d'exploration est disposé par rapport à une surface objet, au moins partiellement brillante, du support de caractères (Z) de telle sorte que l'axe optique (OA) de l'objectif (O) fait un angle de réflexion 0° < α < 25° par rapport à l'incidence normale, caractérisé par au moins une surface (F) réalisant un éclairage diffus ou une réflexion diffuse, en tant sur source de lumière supplémentaire, qui est associée dans l'espace au dispositif d'exploration de sorte que la surface virtuelle associée (F'), qui apparaît dans l'espace objet virtuel en raison de sa réflexion sur la surface objet brillante, éclaire la zone d'exploration (GH) de l'objectif (O), située dans la surface objet.

2. Dispositif optoélectrique d'exploration suivant la revendication 1, caractérisé par le fait qu'on choisit l'angle de réflexion α = 18°.

3. Dispositif optoélectrique d'exploration suivant la revendication 1 ou 2, caractérisé par le fait que la surface (F), qui réalise un éclairage diffus ou une réflexion diffuse, est disposé sur la face intérieure d'un boîtier logeant le dispositif d'exploration.

4. Dispositif optoélectrique d'exploration suivant la revendication 3, caractérisé par le fait que le boîtier se rétrécit avec une forme conique en direction de l'ouverture d'entrée ou de sortie de la lumière.

# FIG 1

# FIG 2